(19) Europäisches Patentamt
European Patent Office
Office européen des brevets

(11) **EP 3 566 074 B1**

(12) **FASCICULE DE BREVET EUROPEEN**

(45) Date de publication et mention
de la délivrance du brevet:
**24.03.2021 Bulletin 2021/12**

(21) Numéro de dépôt: **18700475.9**

(22) Date de dépôt: **09.01.2018**

(51) Int Cl.:
**G01S 13/95** *(2006.01)*     **G01S 7/02** *(2006.01)*

(86) Numéro de dépôt international:
**PCT/EP2018/050470**

(87) Numéro de publication internationale:
**WO 2018/127605 (12.07.2018 Gazette 2018/28)**

(54) **PROCEDE D'ESTIMATION D'UN TAUX DE PRECIPITATIONS, NOTAMMENT DE PLUIE OU DE NEIGE**

VERFAHREN ZUR SCHÄTZUNG EINER NIEDERSCHLAGSRATE, INSBESONDERE FÜR REGEN ODER SCHNEE

METHOD FOR ESTIMATING A PRECIPITATION RATE, IN PARTICULAR FOR RAIN OR SNOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2017 FR 1750186**

(43) Date de publication de la demande:
**13.11.2019 Bulletin 2019/46**

(73) Titulaire: **Novimet**
**78180 Montigny-le-Bretonneux (FR)**

(72) Inventeurs:
• **MOREAU, Emmanuel**
**75014 Paris (FR)**
• **LE BOUAR, Erwan**
**93100 Montreuil (FR)**
• **TESTUD, Jacques**
**75017 Paris (FR)**

(74) Mandataire: **Regimbeau**
**20, rue de Chazelles**
**75847 Paris Cedex 17 (FR)**

(56) Documents cités:
**WO-A1-99/38028          WO-A1-03/007016**
**WO-A1-2005/040853**

**Description**

**DOMAINE DE L'INVENTION**

L'invention est relative à une technique météorologique, et concerne plus précisément un procédé d'estimation d'un taux de précipitations, notamment de pluie ou de neige, au moyen d'un radar.

**ETAT DE LA TECHNIQUE**

La mesure d'un taux de précipitations est usuellement réalisée *in situ,* par exemple par un pluviomètre. Dans le cas d'une mesure de précipitation neigeuse, cette mesure peut être réalisée par un pluviomètre chauffant qui collecte les flocons de neige et mesure la hauteur d'eau équivalente fondue. Les pluviomètres permettent de mesurer avec précision les précipitations en un point du territoire. En revanche, leur mise en œuvre, pour cartographier des précipitations pluvieuses ou neigeuses, peut être complexe et/ou coûteuse. De plus, une mesure de précipitation par un pluviomètre rend compte des précipitations déjà tombées : la précipitation à une altitude donnée ne peut pas être déduite en un temps court devant le temps caractéristique de la précipitation.

À cet effet, une méthode de mesure d'un taux de précipitations par radar a été développée. Un radar météo peut mesurer une carte de la réflectivité Z d'un signal radio émis. Des relations empiriques reliant la réflectivité Z et le taux de précipitations pluvieuses R, ou le taux de précipitations neigeuses S, sont connues. Cependant, ces relations sont fortement dépendantes du type de précipitations (pluie ou neige) à mesurer.

Une relation empirique connue entre la réflectivité Z et le taux de précipitations (R ou S) est la relation de Marshall-Palmer suivante :

$$Z = 200\,R^{1,5} \qquad\qquad (1)$$

Cette relation suppose une distribution exponentielle de la dimension des gouttes de pluie, par exemple décrite par la formule (2) suivante :

$$N(D) = N_0 e^{-\Lambda D} \qquad\qquad (2)$$

dans laquelle D correspond au diamètre des gouttes et $N_0$ et $\Lambda$ sont des constantes. On désigne par le terme « paramètre d'interception » le paramètre $N_0$ dont la valeur dans ce modèle est constante et égale à $0,8.10^7$ m$^{-4}$. Cependant, ce paramètre peut varier dans la réalité dans une gamme couvrant au moins deux décades, par exemple de $0,8.10^6$ m$^{-4}$ à $0,8.10^8$ m$^{-4}$. Cette variation entraîne une incertitude trop élevée dans le calcul de R ou de S.

À cet effet, Testud *et al.* (Testud J., S. Oury, P. Amayenc and R. Black, 2001: The concept of "normalized" distribution to describe raindrop spectra: a tool for cloud physics and cloud remote sensing, Jour. of Applied Meteorology, 40, n°6, 1118-1140.) ont proposé l'utilisation d'un paramètre adimensionné $N_0$* caractérisant un type de pluie (bruine, pluie fine, pluie modérée, pluie averse, etc.).

Testud *et al.* ont montré qu'il était possible d'utiliser des paramètres constants C et d valables pour tout type de pluie, selon la relation suivante :

$$\frac{R}{N_0^*} = c.\left(\frac{Z}{N_0^*}\right)^{d} \qquad\qquad (3)$$

Il est également connu d'émettre simultanément (ou alternativement) en polarisation horizontale H et verticale V, et de recevoir séparément le signal copolaire de chacune des polarisations. On désigne par « radar météo à diversité de polarisation » un radar mettant en œuvre ce type de mesure. La phase différentielle $\Phi_{DP}$ peut être mesurée entre les polarisations H et V du signal radar. L'estimation du taux de précipitations est généralement confrontée au problème de l'atténuation de l'onde radar et à celui de la variabilité naturelle du type de précipitation (pluie ou neige).

À cet effet, la demande de brevet WO 99/38 028 décrit un radar cohérent à diversité de polarisation associé à un algorithme de traitement appelé ZPHI (marque déposée de la société Novimet). L'algorithme ZPHI est un algorithme profileur qui utilise en entrée un profil de réflectivité mesurée Z et une contrainte donnée par une différence de phase différentielle entre deux points $r_0$ et $r_1$ d'une ligne de visée. A partir des mesures de réflectivité et de phase différentielle, il est possible de déterminer l'atténuation spécifique K, et le paramètre $N_0$*.

À cet effet, la demande de brevet WO 03007016 décrit la mise en œuvre d'un algorithme ZPHI lorsque l'atténuation est négligeable. Il décrit en outre une relation permettant de lier la réflectivité équivalente $Z_e$ et le taux de phase différentielle $K_{DP}$, par la formule (4) :

$$\frac{K_{DP}}{N_0^*} = a.\left(\frac{Z_e}{N_0^*}\right)^b \qquad (4)$$

où a et b sont des coefficients spécifiés par un modèle de diffusion dépendant du type de précipitation (pluie ou neige). La formule (4) permet de déduire la valeur de $K_{DP}$ en fonction des paramètres a et b selon la formule (5) suivante :

$$K_{DP} = a.N_0^{*(1-b)}.Z_e^b \qquad (5)$$

En supposant $N_0^*$ constant sur un segment compris entre deux points $r_0$ et $r_1$ d'une ligne de visée, et en supposant une absence d'atténuation ou une atténuation négligeable, il est possible d'intégrer la formule (5) de manière à déduire la valeur de l'estimateur $N_0^*$ :

$$N_0^* = \left(\frac{\Phi_{DP}(r_2)-\Phi_{DP}(r_1)}{a\int_{r_1}^{r_2} Z^b dr}\right)^{\frac{1}{1-b}} \qquad (6)$$

Ainsi, il est possible d'utiliser la valeur de $N_0^*$ calculée par la formule (6), dans une relation entre R et Z décrite par la formule (3) pour estimer un taux de précipitations. L'utilisation de cette méthode de mesure entraîne des erreurs et/ou des incertitudes sur le taux de précipitations calculé.

La demande de brevet WO 2005040853 décrit une méthode permettant de restituer un profil vertical d'une précipitation neigeuse à partir d'un profil vertical de réflectivité Z. Elle décrit en particulier une relation de proportionnalité entre le rapport de la réflectivité Z sur $N_0^*$ et le diamètre effectif $D_\varphi$ des particules de neige à la puissance sept. Le diamètre effectif $D_\varphi$ peut être calculé par différents modèles d'agrégation des particules précipitantes, en intégrant sur une ligne verticale une équation différentielle dépendante de $D_\varphi$. Il est ainsi possible de calculer les variations de $N_0^*$ en fonction d'une altitude considérée dans un plan vertical en utilisant un modèle d'agrégation des particules.

Cette méthode nécessite néanmoins des calculs complexes (résolutions d'équations différentielles) qui peuvent être incompatibles avec une mesure du taux de précipitations à l'intérieur de rayons importants, typiquement de l'ordre de 100 km, dans un temps limité, par exemple en moins de 10 minutes.

Il existe donc un besoin d'estimation précise et rapide des précipitations, quels que soient leurs types, dans le domaine des prévisions météorologiques et plus particulièrement dans des applications liées à la gestion des bassins versants ou fluviaux, à la gestion des réseaux routiers ou encore pour les aéroports.

## RESUME DE L'INVENTION

Un but de l'invention est de proposer une solution pour estimer efficacement un taux de précipitations pluvieuses ou neigeuses, dans un volume défini par un espace autour d'un radar.

En particulier, un autre but de l'invention est de proposer une méthode pour estimer plus rapidement un modèle pertinent de $N_0^*$ en fonction de la distance au radar.

Selon un aspect, l'invention propose un procédé d'estimation d'un taux de précipitations dans lequel on met en œuvre les étapes suivantes :

a) mesure au moyen d'un radar bipolaire de la phase différentielle et de la réflectivité Z d'une onde radioélectrique, selon au moins l'une des polarisations dudit radar, sur un intervalle de rayon de trajet [r0, r1] d'une ligne de visée du radar où $r_0$ et $r_1$ sont deux points de la ligne de visée, $r_0$ coïncidant avec une isotherme 0°C dans le cas de précipitations neigeuses ;

b) détermination de la ou des valeurs du ou des paramètres d'ajustement d'un modèle d'un paramètre d'interception $N_0^*$ en fonction de r et d'une condition $N_0^*(r_0)$, $N_0^*(r_0)$ étant la valeur en $r_0$ du paramètre d'interception $N_0^*$ variant en fonction du rayon r et du (ou des) paramètre(s) d'ajustement, le ou les paramètres d'ajustement et la condition minimisant dans l'intervalle de rayon de trajet $[r_0, r_1]$ un écart donné par la relation :

$$\Phi_{DP}(r) - \Phi_{DP}(r_0) - G\left(\int_{r_0}^{r} a\,\{N_0^*(r_0, E, u)\}^{1-b}Z^b du\right)$$

où $\Phi_{DP}$ est la phase différentielle, G est une fonction adaptée au type de précipitation, a et b sont des coefficients adaptés au type de précipitation et E est un ensemble comprenant le (ou les) paramètre(s) d'ajustement, en variant la condition $N_0^*(r_0)$ et le ou les paramètres d'ajustements pour minimiser l'écart ;

c) calcul d'un taux de précipitations en fonction de la réflectivité Z mesurée lors de l'étape a) et d'une courbe de paramètre d'interception entre $r_0$ et $r_1$, qui correspond au(x) paramètre(s) d'ajustement déterminé(s) lors de l'étape b).

Avantageusement, la direction du rayon est oblique par rapport à la surface de la terre.

Avantageusement, l'écart est minimisé par la méthode des moindres carrés.

Avantageusement, le procédé est un procédé d'estimation d'un taux de précipitations neigeuses dans lequel la fonction G est une fonction identité.

Avantageusement, la fonction G est une fonction prenant en compte l'atténuation dans la pluie.

Avantageusement, le rayon $r_0$ coïncide avec une isotherme de 0°C.

Avantageusement, lorsque le sol est à une température inférieure à 0°C, le rayon $r_0$ coïncide avec un point au sol.

Avantageusement, on met en œuvre un traitement de minimisation par la méthode du gradient conjugué pour déterminer une condition $N_0^*$ et un paramètre d'ajustement.

Avantageusement, lors de l'étape b), le paramètre d'interception $N_0^*$ est modélisé par une fonction linéaire, une fonction parabolique ou une fonction arc tangente, ou une combinaison de celles-ci.

L'invention propose également un produit programme d'ordinateur comprenant des instructions adaptées à la mise en œuvre d'un procédé proposé par l'invention.

## PRESENTATION DES DESSINS

D'autres caractéristiques et avantages ressortiront encore de la description qui suit, laquelle est purement illustrative et non limitative, et doit être lue en regard des figures annexées, parmi lesquelles :

- la figure 1 illustre un profil de la réflectivité Z mesuré en fonction de l'altitude h dans un plan vertical ;
- la figure 2 illustre une simulation de la fréquence de collisions $F_c$ des particules de neige dans un plan vertical en fonction de l'altitude h;
- la figure 3 illustre une simulation de la valeur de $N_0^*$ en fonction de l'altitude h ;
- la figure 4 illustre une simulation de l'estimation d'un taux de précipitations de neige en fonction de leur diamètre ;
- la figure 5 illustre une simulation de la variation de la vitesse de chute de flocons de neige en fonction de l'altitude dans un plan verticale ;
- la figure 6 illustre un modèle de diffusion permettant de relier le taux de phase différentielle normalisé à la réflectivité normalisée ;
- la figure 7 illustre un modèle de diffusion permettant de relier le taux de précipitations normalisé à la réflectivité normalisée ;
- la figure 8 illustre des simulations de la variation de $N_0^*$ en fonction de l'altitude pour différents modèles ;
- la figure 9 illustre un radar bipolaire adapté à la mise en œuvre d'un procédé conforme à l'invention ;
- la figure 10 illustre une ligne de visée du radar bipolaire ;
- la figure 11 illustre un procédé conforme à l'invention ;
- la figure 12 illustre des mesures expérimentales de $N_0^*$ en fonction de l'altitude par rapport à l'isotherme 0°C.

## DEFINITION

On désigne par « oblique » une direction différente d'une direction verticale ou horizontale par rapport au plan localement défini par la terre à l'emplacement du radar.

## ELEMENTS THEORIQUES

Il est possible d'appliquer l'algorithme ZPHI en prenant en compte la variation de $N_0^*$ avec l'altitude h. Cette variation peut être calculée par un modèle d'agrégation des particules de neige au cours de leur chute.

Un modèle de diffusion des particules peut prendre en compte les paramètres de densité des particules, ainsi que d'aplatissement et de vitesse des particules au cours de leur chute.

La densité des particules de neige (ou de glace) est modélisée en assimilant les particules à des sphéroïdes aplatis. Une relation de puissance peut être établie entre leur densité et leur diamètre effectif (ou diamètre caractéristique) $D_\varphi$ selon la formule (7) :

$$\rho = \rho_i D_\phi^{-\alpha} / D_0^{-\alpha} \qquad (13)$$

pour $D_\varphi$ strictement supérieur à $D_0$ et

$$\rho = \rho_i \qquad (14)$$

pour $D_\varphi$ inférieur ou égal à $D_0$, où $\rho_i$ correspond à la densité de la glace, $\alpha$ est une constante (typiquement comprise entre 0,7 et 1,1) et $D_0$ le diamètre de la particule pour lequel la particule ne comporte pas d'air. $D_0$ peut être compris entre 50 et 200 $\mu$m et préférentiellement égal à 100 $\mu$m.

L'aplatissement des particules de glace est modélisé en considérant un rapport axial $\varepsilon$ égal à 0,2 pour $D_\varphi$ inférieur à 200 $\mu$m, un rapport axial $\varepsilon$ égal à 0,8 pour $D_\varphi$ supérieur à 1 mm et un rapport axial variant de manière linéaire entre les bornes définies par $D_\varphi$ = 200 $\mu$m et $D_\varphi$ = 1 mm.

La vitesse de chute des particules est modélisée par une loi de puissance définie par la formule (15) suivante :

$$V_t = A_v . D_\varphi^{B_v} \qquad (15)$$

où $V_t$ est la vitesse de chute des particules, $A_v$ et $B_v$ sont des constantes calculées en fonction des coefficients de Reynolds, de l'accélération de la gravité $g$, de la densité de l'air $\rho_a$ et de sa viscosité cinématique $v$.

La distribution granulométrique des particules choisie est une loi de distribution exponentielle en diamètre équivalent fondu $D_{eq}$, définie par la formule (16) suivante :

$$N(D_{eq}) = N_0 \exp(-\Lambda D_{eq}) \qquad (16)$$

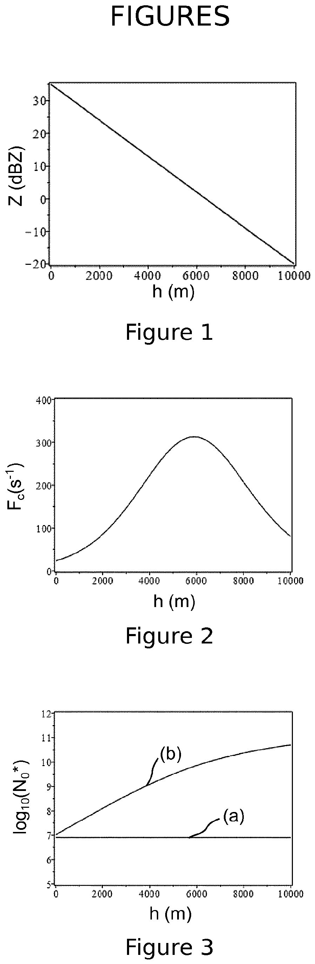

La figure 1 illustre un profil de la réflectivité Z mesuré en fonction de l'altitude h dans un plan vertical. Il est connu d'inverser la mesure de Z dans un plan vertical par un modèle de diffusion prenant en compte l'agrégation de particules de neige.

La figure 2 illustre une simulation de la fréquence de collisions $F_c$ des particules de neige dans un plan vertical en fonction de l'altitude h en considérant l'agrégation des particules de neige.

La figure 3 illustre une simulation de la valeur de $N_0^*$ en fonction de l'altitude h selon des méthodes connues de l'art antérieur. En particulier, la courbe (a) correspond à une valeur de $N_0^*$ constante, et la courbe (b) correspond à une simulation de la valeur de $N_0^*$ tenant compte de l'agrégation des particules de neige dans un plan vertical.

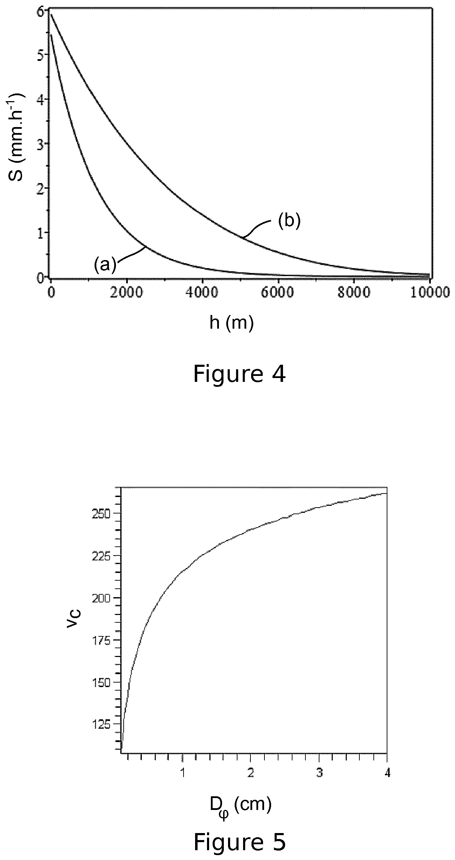

La figure 4 illustre une simulation de l'estimation du taux de précipitations de neige en fonction de l'altitude h dans un plan vertical. La courbe (a) correspond à une estimation du taux de précipitations issu de l'inversion d'une mesure Z en prenant en compte un modèle dans lequel $N_0^*$ est constant. La courbe (b) correspond à une estimation du taux de précipitations de neige, dans un plan vertical, issu de l'inversion d'une mesure de Z en prenant en compte un modèle dans lequel $N_0^*$ dépend de l'agrégation des particules de neige.

La figure 5 illustre une simulation de la vitesse de chute $V_C$ en fonction d'un diamètre effectif $D_\varphi$ d'une particule de neige (ou d'un flocon de neige). La vitesse est simulée à une altitude de 5000 m, par une loi de vitesse de chute d'un modèle d'agrégation, dans un plan vertical.

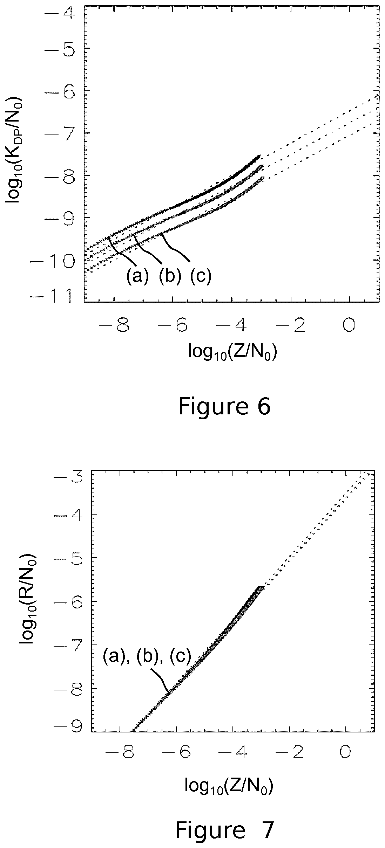

La figure 6 illustre un modèle de diffusion permettant de relier le taux de phase différentielle normalisé $K_{DP}/N_0$ à la réflectivité normalisée $Z/N_0$. Les courbes (a), (b) et (c) de la figure 6 illustrent les variations du rapport entre le taux de phase différentielle $K_{DP}$ et $N_0$ en fonction du rapport entre la réflectivité Z et $N_0$, pour des ondes radioélectriques appartenant respectivement à la plage de fréquence correspondant aux bandes X, C et S.

Les courbes (a), (b) et (c) peuvent être ajustées à des droites en représentation log-log. Ainsi, les variations de $N_0^*$ selon un modèle d'agrégation peuvent vérifier les formules (4) et (5).

La figure 7 illustre un modèle de diffusion permettant de relier le taux de précipitations normalisé $R/N_0$ à la

réflectivité normalisée $Z/N_0$. Le modèle d'agrégation utilisé dans la simulation illustrée par la figure 7 est le même que dans la figure 6. Les courbes (a), (b) et (c) peuvent être ajustées à des droites dans une représentation log-log. Ainsi les variations de $N_0^*$ selon un modèle d'agrégation peuvent vérifier la formule (3).

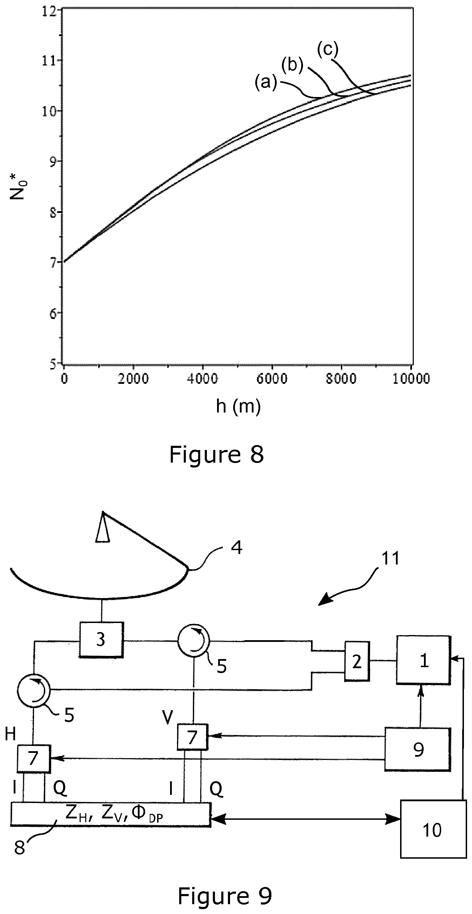

La figure 8 illustre des simulations de la variation de $N_0^*$ en fonction de l'altitude h pour différents modèles analytiques et pour le modèle d'agrégation. La courbe (a) de la figure 8 illustre la variation de $N_0^*$ en fonction de l'altitude h suivant le modèle d'agrégation des particules décrit précédemment. La variation de $N_0^*$ en fonction de h peut être décrite par une fonction analytique connue, et ajustable selon au moins un paramètre. Par exemple, la courbe (c) de la figure 8 illustre une variation parabolique de $N_0^*$ en fonction de h selon la formule (17) suivante :

$$[Log_{10}(N_0^*)](h) = [Log_{10}(N_0^*)](h_0) + A(h - h_0) - B(h - h_0)^2 \qquad (17)$$

où $h_0$ est une hauteur choisie parmi un point coïncidant avec une isotherme 0°C et un point au sol (dans le cas où la température au sol est inférieure à 0°C), et A et B sont deux paramètres d'ajustement constants. Les paramètres d'ajustement A et B sont par exemple choisis égaux respectivement à $5,5.10^{-4}$ m$^{-1}$ et à $-2.10^{-8}$ m$^{-2}$.

La courbe (b) de la figure 8 illustre une variation en arc tangente de $N_0^*$ en fonction de h selon la formule (18) suivante :

$$[Log_{10}(N_0^*)](h) = [Log_{10}(N_0^*)](h_0) + A. arctan\{(h - h_0)/B\} \qquad (18)$$

où A et B sont deux paramètres d'ajustement constants. Les paramètres A et B sont par exemple choisis dans ce cas égaux respectivement à 3,5 et à 6000 m.

En outre, une variation de $N_0^*$ en fonction de h peut être modélisée par une fonction linéaire selon la formule (19) suivante :

$$[Log_{10}(N_0^*)](h) = [Log_{10}(N_0^*)](h_0) + A(h - h_0) \qquad (19)$$

En particulier, les modèles des formules (17), (18) et (19) sont valables en remplaçant h par r, r correspondant à la distance au radar sur une ligne de visée oblique. Ainsi, la variation de $N_0^*$ en fonction de r peut être décrite par une fonction analytique connue, et ajustable selon au moins un paramètre d'ajustement d'un modèle du paramètre d'interception $N_0^*$ en fonction de r. Ce modèle de variation de $N_0^*$ est prédéfini et peut par exemple correspondre à une variation de $N_0^*$ parabolique comme en formule 17, arc tangentielle en formule 18 ou linéaire en formule 19.

Il est possible d'intégrer la formule (5) entre $r_0$ (défini par un rayon correspondant à un point de l'espace choisie parmi un point coïncidant avec une isotherme de 0°C et un point au sol dans le cas où la température au sol est inférieure à 0°C) et $r_1$ (dans la précipitation). Par exemple, lors de précipitations pluvieuses, on choisit préférentiellement un rayon $r_0$ correspondant à un point au sol. Lors de précipitations neigeuses, on choisit préférentiellement un rayon $r_0$ correspondant à un point coïncidant avec une isotherme 0°C.

## EXEMPLE DE MISE EN ŒUVRE

La figure 9 illustre un radar bipolaire 11. Le radar bipolaire 11 peut comprendre :

- un émetteur 1 ;
- un diviseur de puissance 2 à 3 dB recevant le signal de sortie de l'émetteur 1 ;
- un extracteur de mode (ou orthomode) 3 relié par deux voies H et V aux sorties d'un diviseur de puissance 2 ;
- une antenne 4 à cornet transmettant ou recevant les deux polarisations H et V ;
- des circulateurs 5 (tés de filtrage) interposés, sur les voies H et V, entre l'extracteur de mode 3 et le diviseur de puissance 2 ;
- des moyens de réception 7 reliés, pour les voies H et V, aux circulateurs 5 ;
- un oscillateur 9 qui synchronise l'émetteur 1 et les moyens de réception 7 ;
- des moyens 8 d'échantillonnage, puis de traitement des sorties I et Q de ces moyens de réception 7, les moyens de traitement 8 permettant la détermination à partir des paramètres $Z_H$, $Z_V$ et la phase différentielle $\Phi_{DP}$ lesquels vérifient en notation complexe $Z_{H,V} = [I_{H,V}{}^2 + Q_{H,V}{}^2]^{1/2}$ et $\Phi_{DP} = arg[(I_H + iQ_H)(I_V - iQ_V)]$, où $I_{H,V}$ et $Q_{H,V}$ sont des valeurs obtenues par échantillonnage des sorties I et Q des voies H et V.

Les moyens de traitement 8 peuvent comporter des convertisseurs analogique-numérique, permettant d'échantillonner les sorties I et Q. Les moyens de traitement 8 peuvent être reliés à un ordinateur 10 permettant de traiter et de stocker les sorties I, Q, $Z_H$, $Z_V$ et/ou $\Phi_{DP}$. L'ordinateur 10 comprend au moins un calculateur et au moins une mémoire. L'ordinateur 10 permet également de contrôler d'autres éléments du radar bipolaire, comme l'émetteur 1.

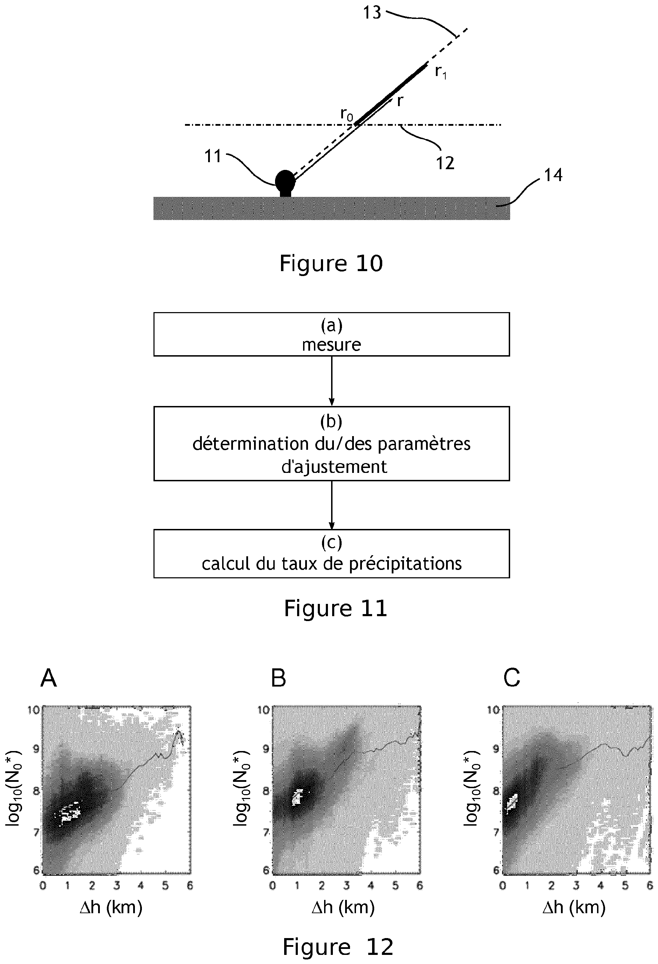

La figure 10 illustre une ligne de visée du radar bipolaire 11. Le plan illustré par la figure 10 est vertical. Le radar bipolaire 11 est agencé sur un plan horizontal localement défini par la terre 14. Une partie de l'atmosphère est délimitée par une isotherme 0°C 12 : l'isotherme 0°C correspond par exemple à un plan horizontal dans l'atmosphère, comme illustré dans la figure 10. La partie de l'atmosphère délimitée par l'isotherme 0°C et dont la température est inférieure ou égale à 0°C (c'est-à-dire la partie au-dessus de l'isotherme 0°C dans la figure 10) comprend une partie de la ligne de visée 13. La ligne de visée 13 peut être oblique, et ainsi définir un angle non nul et différent de 90°C avec le plan localement défini par la terre 14. Les points de la ligne de visée 13 sont distants d'un rayon r du radar bipolaire 11. Le rayon $r_0$ correspond à un point de la ligne de visée coïncidant avec l'isotherme 0°C. Le rayon $r_1$ correspond à un point de la ligne de visée à l'intérieur de la zone de l'atmosphère dont la température est inférieure ou égale à 0°C. La partie de la ligne de visée illustrée en trait épais correspond à l'intervalle de rayon de trajet $[r_0, r_1]$ de la ligne de visée 13.

La figure 11 illustre des étapes d'un procédé d'estimation d'un taux de précipitation à partir de mesures obtenues par le radar bipolaire 11.

Lors de l'étape a) de mesure, on mesure au moyen du radar 11 la phase différentielle $\Phi_{DP}$ et la réflectivité Z d'une onde radioélectrique selon au moins l'une des polarisations du radar (par exemple les signaux $Z_H$ et $Z_V$ en sortie du moyen de traitement 8). Ces mesures peuvent être mises en œuvre en utilisant le radar bipolaire 11 correspondant à la figure 9.

La phase différentielle $\Phi_{DP}$ et la réflectivité Z sont mesurées lors de l'étape a) sur un intervalle $[r_0, r_1]$ de rayon r de trajet par rapport audit radar.

L'utilisateur peut choisir au préalable un modèle du paramètre d'interception $N_0^*$, utilisé par le procédé, en utilisant l'interface de l'ordinateur. Ce modèle est une fonction de r et du (ou des) paramètre(s) d'ajustement. Il peut être défini par la valeur de $N_0^*$ au point $r_0$, désignée par la condition $N_0^*(r_0)$, et comprend au moins un paramètre d'ajustement (supplémentaire). La figure 8 illustre des modèles adaptés de $N_0^*(r)$.

Lors de l'étape b) de détermination, le ou les moyens de traitement 8 et/ou l'ordinateur 10 déterminent au moins la condition $N_0^*(r_0)$ et un paramètre d'ajustement ou un ensemble de paramètres d'ajustement E de la variation de $N_0^*$ avec r selon un modèle de variation prédéfini, par exemple un modèle linéaire, parabolique ou arc tangentiel. Par « modèle », on entend un modèle analytique dans lequel le ou les paramètres d'ajustement ne sont pas fixés au préalable. On détermine en particulier la ou les valeurs du ou des paramètres d'ajustement. La condition $N_0^*(r_0)$ et le ou les paramètres d'ajustement sont déterminés en minimisant numériquement dans l'intervalle de rayon de trajet $[r_0, r_1]$ l'écart entre :

- la différence de phase différentielle $\Phi_{DP}$ entre r et $r_0$ mesurée lors de l'étape a) du procédé, et
- une fonction adaptée au type de précipitation de la réflectivité Z mesurée lors de l'étape a) et de la condition $N_0^*(r_0)$ et du (ou des) paramètre(s) d'ajustement.

L'écart minimisé lors de l'étape b) peut être défini par la formule (20) suivante :

$$\Phi_{DP}(r) - \Phi_{DP}(r_0) - G\left(\int_{r_0}^{r} a\left\{N_0^*(r_0, E, u)\right\}^{1-b} Z^b du\right) \qquad (20)$$

où G est une fonction prédéfinie adaptée au type de précipitation (par exemple adaptée à l'atténuation entraînée par une précipitation), a et b sont des coefficients adaptés au type de précipitation et E est un ensemble comprenant chaque paramètre du modèle de $N_0^*$ en fonction de r.

L'écart peut être avantageusement minimisé lors de l'étape b) par le ou les moyens de traitement 8 et/ou l'ordinateur 10 en utilisant par exemple la méthode des moindres carrés et en minimisant numériquement, dans l'intervalle de rayon de trajet $[r_0, r_1]$, la fonctionnelle F suivante :

$$F = \int_{r_0}^{r_1} \left\{\Phi_{DP}(r) - \Phi_{DP}(r_0) - G\left(\int_{r_0}^{r} a\left\{N_0^*(r_0, E, u)\right\}^{1-b} Z^b du\right)\right\}^2 dr$$

$$(21)$$

Lors de l'étape c) de calcul du taux de précipitations, le ou les moyens de traitement 8 et/ou l'ordinateur 10 déterminent ou calculent un taux de précipitation R, S en fonction de la réflectivité Z mesurée lors de l'étape a) et d'une courbe de paramètre d'interception entre $r_1$ et $r_0$, qui correspond au(x) paramètre(s) d'ajustement déterminé(s) lors de l'étape b). Le taux de précipitation peut être calculé numériquement en utilisant la formule (3) normalisée.

Lors de précipitations neigeuses, l'atténuation de l'onde radioélectrique peut être négligée. La fonction G peut être remplacée par une fonction identité.

La relation de puissance suivant la formule (22) ne tenant pas compte de l'atténuation, peut être intégrée :

$$K_{DP} = aN_0^{*1-b}Z^b \qquad (22)$$

L'utilisateur ayant choisi au préalable les modèles analytiques correspondant aux formules (17), (18) et (19), on obtient après intégration respectivement les formules (23), (24) et (25), définissant le noyau de la fonctionnelle F :

$$\Phi_{DP}(r) - \Phi_{DP}(r_0) = \{N_0^*(r_0)\}^{1-b} \int_{r_0}^{r} aZ(u)^b 10^{(1-b)\{A(u-r_0)-B(u-r_0)^2\}}du \qquad (23)$$

$$\Phi_{DP}(r) - \Phi_{DP}(r_0) = \{N_0^*(r_0)\}^{1-b} \int_{r_0}^{r} aZ(u)^b 10^{(1-b)A.arctan\{(u-r_0)/B\}}du \qquad (24)$$

$$\Phi_{DP}(r) - \Phi_{DP}(r_0) = \{N_0^*(r_0)\}^{1-b} \int_{r_0}^{r} aZ(u)^b 10^{(1-b)A(u-r_0)}du \qquad (25)$$

Une étape de minimisation de l'écart défini dans l'étape b) du procédé peut être avantageusement réalisée par la méthode des moindres carrés. Un écart peut être minimisé lors de l'étape b) d'un procédé d'estimation d'un taux de précipitations et peut être écrit sous la forme de la formule (26) suivante dans le cas d'un modèle parabolique de $N_0^*$ à deux paramètres d'ajustement A et B :

$$F = \int_{r_0}^{r1} \left\{ \Phi_{DP}(r) - \Phi_{DP}(r_0) - \{N_0^*(r_0)\}^{1-b} \int_{r_0}^{r} aZ(u)^b 10^{(1-b)\{A(u-r_0)-B(u-r_0)^2\}}du \right\}^2 dr_1$$

$$(26)$$

L'étape b) de détermination d'un paramètre d'ajustement peut être réalisée à partir des conditions aux limites suivantes :

$$\frac{\partial F}{\partial N_0^*(r_0)} = 0 \; , \qquad (27)$$

$$\frac{\partial F}{\partial A} = 0 \quad \text{et} \qquad (28)$$

$$\frac{\partial F}{\partial B} = 0. \qquad (29)$$

L'étape b) de détermination d'un paramètre d'ajustement peut avantageusement être réalisée en utilisant la méthode des gradients conjugués. Chaque paramètre de l'ensemble E de paramètres d'ajustement et la condition $N_0^*(r_0)$ peuvent ainsi être déterminés par le ou les moyens de traitement 8 et/ou par l'ordinateur 10.

Lors de précipitations pluvieuses, l'atténuation de l'onde radioélectrique est prise en compte. L'atténuation spécifique peut être définie par la formule (30) suivante :

$$K = \gamma K_{DP} \qquad (30)$$

Ainsi, un écart F peut être écrit, en considérant un modèle de variation parabolique de $N_0^*$ en fonction de r selon la formule (31) suivante :

$$F = \int_{r_0}^{r_1} \left\{ \Phi_{DP}(r) - \Phi_{DP}(r_0) \right.$$

$$+ \frac{10}{b} log_{10} \left( \frac{1}{\gamma} \right.$$

$$\left. \left. - 0{,}46b\{N_0^*(r_0)\}^{1-b} \int_{r_0}^{r} aZ_{att}(u)^b 10^{(1-b)\{A(u-r_0)-B(u-r_0)^2\}} du \right) \right\}^2 dr$$

$$(31)$$

On peut minimiser l'écart en minimisant la fonction F dans l'étape b) du procédé en faisant varier la condition $N_0^*(r_0)$ et les paramètres d'ajustement A et B.

La figure 12 illustre des mesures expérimentales de $N_0^*$ en fonction de l'altitude par rapport à l'isotherme 0°C ($\Delta$h). Les panneaux A, B et C de la figure 3 illustrent des mesures quotidiennes (représentées par les parties grisées) de $N_0^*$ selon une échelle logarithmique décimale. Ces données sont obtenues en décembre, avec un radar Hydrix, au mont Vial, en France. L'angle entre le rayon de mesure et la surface de la terre est de 2,4°. La moyenne des mesures de $N_0^*$ est représentée par une courbe noire dans chacun des panneaux.

## Revendications

**1.** Procédé d'estimation d'un taux de précipitations dans lequel on met en œuvre les étapes suivantes :

    a) mesure au moyen d'un radar bipolaire (11) de la phase différentielle et de la réflectivité Z d'une onde radioélectrique, selon au moins l'une des polarisations dudit radar, sur un intervalle de rayon de trajet $[r_0, r_1]$ d'une ligne de visée (13) du radar où $r_0$ et $r_1$ sont deux points de la ligne de visée, $r_0$ coïncidant avec une isotherme 0°C dans le cas de précipitations neigeuses ;

    b) détermination de la ou des valeurs du ou des paramètres d'ajustement d'un modèle d'un paramètre d'interception $N_0^*$ en fonction de r et d'une condition $N_0^*(r_0)$, $N_0^*(r_0)$ étant la valeur en $r_0$ du paramètre d'interception $N_0^*$ variant en fonction du rayon r et du (ou des) paramètre(s) d'ajustement, le ou les paramètres d'ajustement et la condition minimisant, dans l'intervalle de rayon de trajet $[r_0, r_1]$, un écart donné par la relation :

$$\Phi_{DP}(r) - \Phi_{DP}(r_0) - G\left( \int_{r_0}^{r} a \{N_0^*(r_0, E, u)\}^{1-b} Z^b du \right)$$

    où $\Phi_{DP}$ est la phase différentielle, G est une fonction adaptée au type de précipitation, a et b sont des coefficients adaptés au type de précipitation et E est un ensemble comprenant le (ou les) paramètre(s) d'ajustement, en variant la condition $N_0^*(r_0)$ et le ou les paramètres d'ajustements pour minimiser l'écart ;

    c) calcul d'un taux de précipitations en fonction de la réflectivité Z mesurée lors de l'étape a) et d'une courbe de paramètre d'interception entre $r_1$ et $r_0$, qui correspond au(x) paramètre(s) d'ajustement déterminé(s) lors de l'étape b).

**2.** Procédé selon la revendication 1 dans lequel la direction du rayon est oblique par rapport à la surface de la terre.

**3.** Procédé selon la revendication 1 ou 2 dans lequel l'écart est minimisé par la méthode des moindres carrés.

**4.** Procédé d'estimation d'un taux de précipitations neigeuses selon l'une des revendications 1 à 3 dans lequel la fonction G est une fonction identité.

**5.** Procédé d'estimation d'un taux de précipitations pluvieuses selon l'une des revendications 1 à 3 dans lequel la fonction G est une fonction prenant en compte l'atténuation dans la pluie.

**6.** Procédé selon l'une des revendications 1 à 5, dans lequel, lorsque le sol est à une température inférieure à 0°C, le rayon $r_0$ coïncide avec un point au sol.

**7.** Procédé selon l'une des revendications 1 à 6, dans lequel on met en œuvre un traitement de minimisation par la méthode du gradient conjugué pour déterminer une condition $N_0^*$ et un paramètre d'ajustement.

**8.** Procédé selon l'une des revendications 1 à 7, dans lequel lors de l'étape b), le paramètre d'interception $N_0^*$ est modélisé par une fonction linéaire, une fonction parabolique ou une fonction arc tangente, ou une combinaison de celles-ci.

**9.** Produit programme d'ordinateur comprenant des instructions adaptées à la mise en œuvre des étapes b) et c) de la revendication 1, à partir de la mesure obtenue lors de l'étape a) de la revendication 1.


**Patentansprüche**

**1.** Verfahren zur Schätzung einer Niederschlagsrate, wobei die folgenden Schritte zur Anwendung kommen:

a) Messen, anhand eines bipolaren Radars (11), der differentiellen Phase und der Reflektivität Z einer radioelektrischen Welle gemäß mindestens einer der Polarisationen des Radars auf einem Intervall eines Strahls einer Strecke $[r_0, r_1]$ einer Sichtlinie (13) des Radars, wo $r_0$ und $r_1$ zwei Punkte der Sichtlinie sind, wobei $r_0$ mit einer 0°C Isotherme im Falle von Niederschlag für Schneefall zusammenfällt;
b) Bestimmen des oder der Werte des oder der Anpassungsparameter eines Modells eines Abfangparameters $N_0^*$ in Abhängigkeit von r und einer Bedingung $N_0^*(r_0)$, wobei $N_0^*(r_0)$ der Wert in $r_0$ des Abfangparameters $N_0^*$ ist, der in Abhängigkeit von dem Strahl r und des (oder der) Anpassungsparameter(s) variiert, wobei der oder die Anpassungsparameter und die Bedingung eine gegebene Abweichung in dem Intervall eines Strahls einer Strecke $[r_0, r_1]$ durch die folgende Beziehung minimiert:

$$\Phi_{DP}(r) - \Phi_{DP}(r_0) - G\left(\int_{r_0}^{r} a\left\{N_0^*(r_0, E, u)\right\}^{1-b} Z^b du\right)$$

wobei $\Phi_{DP}$ die differentielle Phase ist, G eine der Niederschlagsart angepasste Funktion ist, a und b der Niederschlagsart angepasste Koeffizienten sind, und E eine Einheit ist, die den (oder die) Anpassungsparameter umfasst, indem die Variation $N_0^*(r_0)$ und der oder die Anpassungsparameter variiert werden, um die Abweichung zu minimieren;
c) Berechnen einer Niederschlagsrate in Abhängigkeit von der im Schritt a) gemessenen Reflektivität Z und einer Abfangparameterkennlinie zwischen $r_1$ und $r_0$, die dem (den) in Schritt b) bestimmten Anpassungsparameter(n) entspricht.

**2.** Verfahren nach Anspruch 1, wobei die Richtung des Strahls in Bezug auf die Oberfläche der Erde schräg ist.

**3.** Verfahren nach Anspruch 1 oder 2, wobei die Abweichung durch das Verfahren der kleinsten Quadrate minimiert wird.

**4.** Verfahren zur Schätzung einer Niederschlagsrate für Schneefall nach einem der Ansprüche 1 bis 3, wobei die Funktion G eine Identitätsfunktion ist.

**5.** Verfahren zur Schätzung einer Niederschlagsrate für Regen nach einem der Ansprüche 1 bis 3, wobei die Funktion G eine Funktion ist, welche die Abschwächung beim Regenfall berücksichtigt.

**6.** Verfahren nach einem der Ansprüche 1 bis 5, wobei, wenn der Boden auf einer Temperatur unter 0°C ist, der Strahl $r_0$ mit einem Punkt am Boden zusammenfällt.

**7.** Verfahren nach einem der Ansprüche 1 bis 6, wobei eine Minimierungsverarbeitung durch das Konjugierte-Gradienten-Verfahren umgesetzt wird, um eine Bedingung $N_0^*$ und einen Anpassungsparameter zu bestimmen.

8. Verfahren nach einem der Ansprüche 1 bis 7, wobei im Schritt b) der Abfangparameter $N_0^*$ durch eine lineare Funktion, eine parabolische Funktion oder eine Tangensfunktion oder eine Kombination derselben modelliert wird.

9. Computerprogrammprodukt, Anweisungen umfassend, die zur Umsetzung der Schritte b) und c) von Anspruch 1 ausgehend von der im Schritt a) von Anspruch 1 erhaltenen Messung angepasst sind.

**Claims**

1. Method for estimating a precipitation rate wherein the following steps are implemented:

   a) measuring, by means of a dual polarisation radar (11), the differential phase and the reflectivity Z of a radio wave, according to at least one of the polarisations of said radar, over a pathway radius interval $[r_0, r_1]$ of a line of sight (13) of the radar, where $r_0$ and $r_1$ are two points on the line of sight, $r_0$ coinciding with a 0°C isotherm in the case of snow precipitations;
   b) determining the value or values of the adjustment parameter or parameters of a model of an interception parameter $N_0^*$ as a function of r and of a condition $N_0^*(r_0)$, $N_0^*(r_0)$ being the value in $r_0$ of the interception parameter $N_0^*$ varying as a function of the radius r and of the adjustment parameter or parameters, the adjustment parameter or parameters and the condition minimising, in the pathway radius interval $[r_0, r_1]$, a difference given by the relationship:

$$\Phi_{DP}(r) - \Phi_{DP}(r_0) - G\left(\int_{r_0}^{r} a\{N_0 * (r_0, E, u)\}^{1-b} Z^b du\right)$$

   where $\Phi_{DP}$ is the differential phase, G is a function adapted to the type of precipitation, a and b are coefficients adapted to the type of precipitation and E is a set comprising the adjustment parameter or parameters, varying the condition $N_0^*(r_0)$ and the adjustment parameter or parameters to minimise the difference;
   c) calculating a precipitation rate according to the reflectivity Z measured during step a) and an interception parameter curve between $r_1$ and $r_0$, which corresponds to the adjustment parameter or parameters determined during step b).

2. Method according to claim 1 wherein the direction of the radius is oblique with respect to the surface of the earth.

3. Method according to claim 1 or 2 wherein the difference is minimised by the least squares method.

4. Method for estimating a snow precipitation rate according to one of claims 1 to 3 wherein the function G is an identity function.

5. Method for estimating a rain precipitation rate according to one of claims 1 to 3 wherein the function G is a function taking into account the attenuation in the rain.

6. Method according to one of claims 1 to 5, wherein, when the ground is at a temperature below 0°C, the radius $r_0$ coincides with a point on the ground.

7. Method according to one of claims 1 to 6, wherein a minimisation treatment by the conjugate gradient method is implemented to determine a condition $N_0^*$ and an adjustment parameter.

8. Method according to one of claims 1 to 7, wherein during step b) , the interception parameter $N_0^*$ is modelled by a linear function, a parabolic function or a tangent arc function, or a combination thereof.

9. Computer program product comprising instructions adapted to the implementation of steps b) and c) of claim 1, from the measurement obtained during step a) of claim 1.

# FIGURES

Figure 1

Figure 2

Figure 3

Figure 4

Figure 5

Figure 6

Figure 7

Figure 8

Figure 9

Figure 10

(a)
mesure

(b)
détermination du/des paramètres
d'ajustement

(c)
calcul du taux de précipitations

Figure 11

A            B            C

Figure 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9938028 A
- WO 03007016 A
- WO 2005040853 A

**Littérature non-brevet citée dans la description**

- **TESTUD J. ; S. OURY ; P. AMAYENC ; R. BLACK.** The concept of ''normalized'' distribution to describe raindrop spectra: a tool for cloud physics and cloud remote sensing. *Jour. of Applied Meteorology,* 2001, vol. 40 (6), 1118-1140